**Europäisches Patentamt**

**European Patent Office**

**Office européen des brevets**

(11) Publication number: **0 317 151**
**A2**

(12) # EUROPEAN PATENT APPLICATION

(21) Application number: 88310482.0

(51) Int. Cl.⁴: **G01P 15/11**

(22) Date of filing: 08.11.88

(30) Priority: 10.11.87 GB 8726247

(43) Date of publication of application:
24.05.89 Bulletin 89/21

(84) Designated Contracting States:
**DE GB IT SE**

(71) Applicant: **LUCAS INDUSTRIES public limited company**
**Great King Street**
**Birmingham, B19 2XF West Midlands(GB)**

(72) Inventor: **Bowsher, Glynne Thomas**
**127 Shawhurst Lane**
**Hollywood Birmingham B47 5JP(GB)**

(74) Representative: **Spall, Christopher John et al**
**BARKER, BRETTELL & DUNCAN 138 Hagley Road**
**Edgbaston Birmingham B16 9PW(GB)**

(54) Improvements in apparatus for sensing changes in speed of a vehicle.

(57) Apparatus for sensing changes in the speed of a vehicle comprises a core (13) which is displacable within a coil (6, 7) to generate an electrical signal in response to displacement of a damped, inertia-controlled, mass (14). The coil is wound around a hollow former (1) which includes a main chamber (4) in which the mass is housed, and an axial bore (5) leading from the main chamber and in which the core is displacable. The former acts as a separator and a seal between electrical and hydra-mechanical components and preferably comprises a one-piece plastics moulding.

FIG.1.

# IMPROVEMENTS IN APPARATUS FOR SENSING CHANGES IN SPEED OF A VEHICLE

This invention relates to apparatus for sensing changes in the road speed of a vehicle of the kind in which a core is displacable within a coil to generate an electrical signal in response to displacement of a damped, inertia-controlled, mass.

Apparatus of this kind is adapted for use as an accelerometer or a decelerometer in a vehicle brake-by-wire system, in which braking functions are controlled by a computer module which receives signals of vehicle speed changes, vehicle load, vehicle suspension movement, and vehicle deceleration demand.

According to our invention, in apparatus of the kind set forth for sensing changes in the speed of a vehicle, the coil is wound around a hollow former which includes a main chamber in which the mass is housed, and an axial bore leading from the main chamber and in which the core is displacable.

The former acts as a separator and a seal between electrical and hydra-mechanical components and preferably comprises a one-piece plastics moulding.

Conveniently the former is of stepped outline, both internally and externally, with the main chamber being defined within a main body part of greater area of which the outer end is closed by a deflectable closure member, and the axial bore being disposed within an integral axial extension of smaller area.

In such a construction, the axial extension has at least one flat surface forming a mounting for a circuit board, and electrically conductive pins are soldered at one end to the coil and at the other to the circuit board. Electrical continuity is therefore easily and rigidly maintained.

The mass may be suspended within the main chamber by a pair of spring means and the main chamber and the bores are filled with a damping fluid, suitably silicon liquid, with the closure member being deflectable to accommodate changes in the volume of the damping fluid. The closure member may also act as a back stop for the spring means.

The core may comprise a soft iron probe which is carried from a carrier which also provides a mounting for the mass.

In one construction the carrier has an axially extending probe and a pin which project axially in opposite directions, and the core comprises a sleeve which surrounds the probe, the mass being mounted on the pin between axially spaced shoulders on the carrier.

Preferably the former and the carrier are both constructed from similar materials, suitably plastics, having the same co-efficients of expansion in order to eliminate zero shift with expansion due to temperature.

One embodiment of our invention is illustrated in the accompanying drawings in which:-

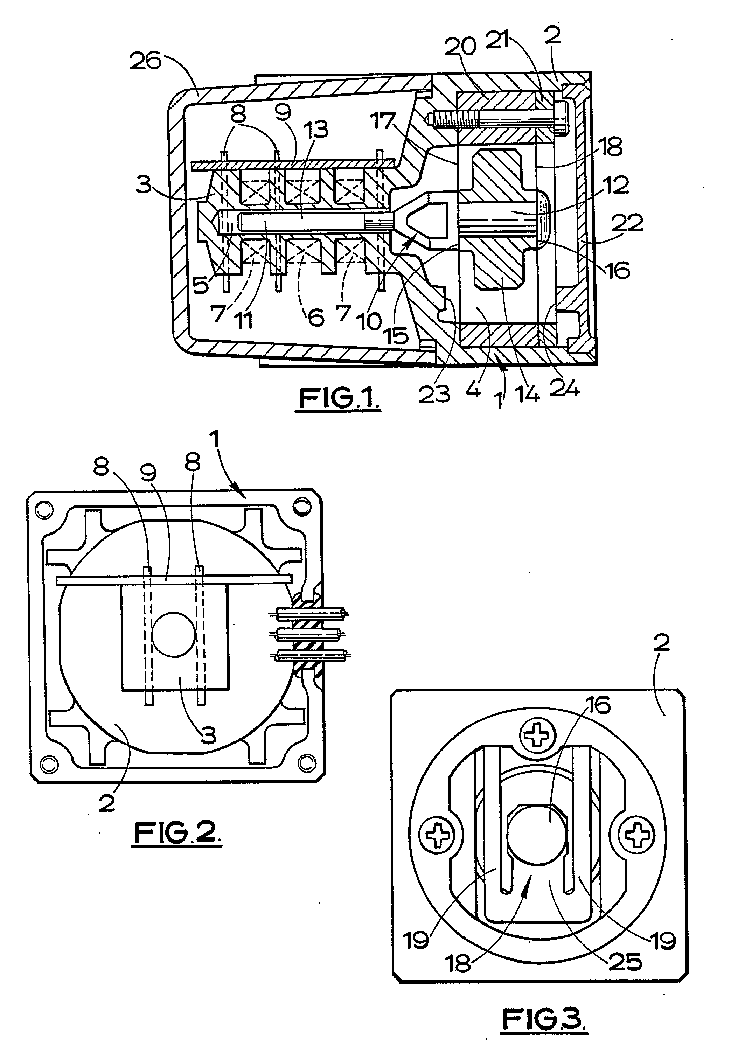

Figure 1 is a longitudinal section through an accelerometer/decelerometer unit;

Figure 2 is a view of the one end of the unit with an end cap removed; and

Figure 3 is a view of the other end of the unit with an end closure removed.

The unit illustrated in the drawings comprises a one-piece hollow former 1 of plastics material which is of stepped outline and comprise a body part 2 from one end of which projects an axial extension 3. The body part 2 defines a main damper chamber 4 from which an axial bore 5 projects into the extension 3. The body part 2 is of generally square outline with the main chamber 4 and the bore 5 both being circular. The extension 3 is also square, and primary and secondary electrical transformer coils 6, 7 are wound around it. Pins 8 extend through the extension 3. A circuit board 9 is mounted on the extension 3 and is soldered to one end of the pins 8 with the coils 6, 7 soldered to the other end.

A carrier 10 of plastics material similar to the material of the former 1 has an oppositely directed axially extending probe 11 and a circular pin 12. The probe 11 extends into the bore 5 and carries a soft iron sleeve 13 which defines a core. The pin 12 provides a mounting for a seizmic mass 14 which is located between shoulders 15, 16 at opposite ends of the pin 12. A pair of axially spaced suspension blade springs 17, 18, each of generally W outline, are clamped between opposite ends of the mass 14 and the respective shoulders 15, 16. Specifically the upwardly directed centre portions 25 of the springs 17, 18 are clamped between the mass 14 and the shoulders 15, 16, and upper ends of the limbs 19 of each spring 17, 18 are clamped between the former 1 and a spacer 20, and between the spacer 20 and a retaining ring 21, respectively.

The outer end of the damper chamber 4 is closed by a flexible diaphragm 22, suitably of plastics material, to retain a volume of damping fluid, suitably silicon liquid, within the interior of the former 1. The former therefore acts as a separator and a seal between the electrical and hydra-mechanical components. This keeps the unit electronically dry and removes the need to seal the cable against fluid losses.

Stops 23 and 24 are moulded on the former 1 and on the diaphragm 22 to limit movement in opposite directions of an assembly defined by the springs 17, 18 and the mass 14, with the lower ends of the limbs 19 where they join the centre portions being engageable with a respective one of the stops 23, 24.

Finally the unit is completed by an end cap 26, also of plastics material, which encloses the circuit board 9 and the extension 3, and has a sealing engagement with the former 1.

The unit uses the principle of a linear displacement variable transformer (L.D.V.T.). The inertial displacement of the core within the primary and secondary coils 6, 7 in response to acceleration or deceleration of a vehicle in which the unit is mounted with its main axis substantially parallel to the main axis of the vehicle produces an electronic voltage output from an associated electronic circuit which is proportional to such displacement. In use the movement of the seizmic mass 14 is controlled by the springs 17, 18 to be proportional to the acceleration or deceleration being sensed and measured.

Excessive movement of the mass 14 in either direction is arrested by the engagement of one of the springs 17, 18 with its respective stop 23, 24. Thereafter the stiffness of the respective spring changes, with the centre portion 25 deflecting to act as a shock absorber.

The end closure 22 is sealingly welded to the former 1 to act as a diaphragm and counteract expansion/contraction of the volume of damping liquid. Normally, however, this will be accommodated by the presence of a small volume, suitably a bubble of air within the liquid.

## Claims

1. Apparatus for sensing changes in the speed of a vehicle in which a core (13) is displaceable within a coil (6, 7) to generate an electrical signal in response to displacement of a damped, inertia-controlled, mass (14), characterised in that the coil (6, 7) is wound around a hollow former (1) which includes a main chamber (4) in which the mass (14) is housed, and an axial bore (5) leading from the main chamber and in which the core (13) is displaceable.

2. Apparatus according to claim 1, characterised in that the former (1) acts as a separator and a seal between electrical and hydra-mechanical components.

3. Apparatus according to claim 1 or 2, characterised in that the former (1) comprises a one-piece plastics moulding.

4. Apparatus according to any preceding claim, characterised in that the former (1) is of stepped outline both internally and externally and comprises a main body part (2) of greater area, and an axial extension (3) of smaller area which extends integrally from the main body part (2), the main chamber (4) being defined within the main body part (2), and the axial bore (5) being disposed within the axial extension.

5. Apparatus according to claim 4, characterised in that the axial extension (3) has at least one flat surface forming a mounting for a circuit board, and electrically conductive pins (8) are soldered at one end to the coil (6, 7) and at the other to the circuit board.

6. Apparatus according to any preceding claim, characterised in that the mass (14) is suspended within the main chamber (4) by a pair of spring means (17, 18), and the main chamber (4) and the axial bore (5) are filled with a damping fluid.

7. Apparatus according to claim 6, characterised in that the outer end of the main chamber (4) which is remote from the axial bore (5) is closed by a closure member (22), and the closure member (22) is deflectable to accommodate changes in the volume of the damping fluid.

8. Apparatus according to claim 7, characterised in that the former (1) and the closure member (22) are each provided with a stop (23, 24), and the spring means (17, 18) are located between the stops (23, 24) which are spaced axially, each spring means (17, 18) being adapted to co-operate with an adjacent one of the stops (23, 24) to limit movement in opposite directions of an assembly defined by the spring means (17, 18) and the mass (14).

9. Apparatus according to any preceding claim, characterised in that the core (13) comprises a soft iron probe which is carried from a carrier (10), and the carrier (10) also provides a mounting for the mass (14).

10. Apparatus according to claim 9, characterised in that the carrier (10) has an axially extending probe (11) and a pin (12) which project axially in opposite directions, and the core (13) comprises a sleeve which surrounds the probe (11), the mass (14) being mounted on the pin (12) between axially spaced shoulders (15, 16) on the carrier (10).

11. Apparatus according to claim 9 or claim 10, characterised in that the former (1) and the carrier (10) are both constructed from similar materials.

**FIG.1.**

**FIG.2.**

**FIG.3.**